# EUROPÄISCHE PATENTANMELDUNG

(11) **EP 1 251 219 A1**
(43) Veröffentlichungstag der Anmeldung: **23.10.2002**
(21) Anmeldenummer: 01116883.8
(22) Anmeldetag: 11.07.2001
(51) Int. Cl.: E04F 15/02, E04F 15/04, F16B 5/00

(54) **Verfahren zur Verlegung und Verriegelung von Bodenpaneelen**

(71) Anmelder: KRONOTEC AG, 6006 Luzern (CH)
(72) Erfinder: Hecht, Hendrik, 16909 Heiligengrabe (DE)
(74) Vertreter: Rehmann, Klaus-Thorsten, Dipl.-Ing.

(57) **Zusammenfassung**

Es wird ein Verfahren zum Verlegen und mechanischen Verbinden von Bodenpaneelen (P) vorgeschlagen, die an einer Längs- und einer Querseite (4, 3) mit einer Feder (1) und an der gegenüberbliegenden Längs- und Querseite (4, 3) mit einer zu der Feder (1) korrespondierenden Nut (2) versehen sind, wobei Feder (1) und Nut (2) so ausgestaltet sind, dass ineinandergesteckte Paneele (P) in horizontaler Richtung verrasten, mit folgenden Schritten:
a) Verbinden und Verrasten einer Mehrzahl von Paneelen (P₁₁...,P₁ₙ) an ihren Querseiten (3) zum Auslegen einer ersten Reihe (I) auf dem Boden eines Raumes,
b) Verbinden und Verrasten einer Mehrzahl von Paneelen (P₂₁...,P₂ₙ) an ihren Querseiten (3), bis die für eine zweite Reihe (II) erforderliche Länge, die im wesentlichen der Raumlänge entspricht, erreicht ist,
c) Verbinden und Verrasten der zu der zweiten Reihe (II) zusammengesetzten Paneele (P₂₁...,P₂ₙ) mit der Längsseite der in der ersten Reihe (I) liegenden Paneele (P₁₁...,P₁ₙ),
d) Wiederholen der Schritte b) und c) bis der Raum vollständig mit Paneelreihen ausgelegt ist.

## Beschreibung

Die Erfindung betrifft ein Verfahren zum Verlegen und mechanischem Verbinden von Bodenpaneelen in einem Raum, die an einer Längs- und einer Querseite mit einer Feder und an der gegenüberliegenden Längs- und Querseite mit einer zu der Feder korrespondierenden Nut versehen sind, wobei Feder und Nut so ausgestaltet sind, dass ineinandergesteckte Paneele in horizontaler Richtung verrasten.

In der US-A-5,860,267 und der US-A-6,023,907 sind eine Reihe von Verlegeverfahren beschrieben. Bei den bekannten Verfahren liegen die Paneele in einer ersten Reihe und mindestens ein Paneel liegt in der zweiten Reihe und ist mit der Längsseite mit Paneelen der ersten Reihe verbunden. Ein neues Paneel wird teilweise an seiner Querseite mit dem Paneel in der zweiten Reihe verbunden. Dabei liegt das neue Paneel plan auf dem Boden auf. Anschließend werden das Paneel aus der zweiten Reihe und das neue Paneel zusammen angehoben und gegenüber der ersten Reihe abgewinkelt. Das neue Paneel wird dann relativ zu dem Paneel der zweiten Reihe verschoben, bis es mit seiner Längsseite in Paneele der ersten Reihe einrastet.

Anschließend werden das zweite und das neue Paneel wieder herabgeschwenkt, so dass es dann mit der zweiten und der ersten Reihe verriegelt verbunden ist. Gemäß einem weiteren beschriebenen Verfahren wird das neue Paneel zunächst horizontal in Richtung der ersten Reihe geschoben, bis die Paneele an den Längskanten einrasten und dann relativ zur ersten Reihe in Richtung der Querseite des Paneels in der zweiten Reihe geschoben, bis die Paneele einrasten.

Das zuerst beschriebene Verfahren ist recht kompliziert auszuführen, weil die den Bodenbelag verlegende Person mit der einen Hand die Paneele hochschwenken und mit der anderen das neue Paneel in der abgewinkelten Stellung einschieben muss. Verkantet sie dabei das neue Paneel, besteht die Gefahr, dass die Feder ab- oder die Nut ausbricht. Paneele haben eine Länge von bis zu 2,50 m. Es wirkt also ein großer Hebelarm auf die Feder-Nut-Verbindung. Allein das Eigengewicht eines Paneels kann dazu führen, dass die Feder-Nut-Verbindung beschädigt wird, wenn die Paneele vom Boden angehoben werden. Deshalb kann ein derartiges Verlegen im Grunde genommen nur von zwei Personen durchgeführt werden.

Damit ein neues Paneel zunächst mit seiner Längsseite mit der vorderen Paneelreihe verbunden werden kann und dann in Längsrichtung auf das Paneel der zweiten Reihe verschoben werden kann, ist das Feder-Nut-Profil nach der US-A-6,023,907 an der Verbindungsstelle mit einem Spiel Δ versehen. Ein in der Verbindungsstelle vorgesehenes Spiel hat aber den Nachteil, dass die Paneele nicht nur in Richtung der Verbindungsstelle, sondern auch quer dazu verschiebbar sind. Die Anschlussfuge benachbarter Paneele ist also nicht dicht und es kann Feuchtigkeit eindringen. Insbesondere bei Laminat-Paneelen aus MDF oder HDF besteht dann die Gefahr, dass der Kern durch die eindringende Feuchtigkeit quillt und der Boden zerstört wird. Um diese Gefahr auszuschließen, wird in den vorgenannten Druckschriften vorgeschlagen, zwischen die Verbindungsstelle eine Dichtungsmasse, beispielsweise Silikon oder ein Gummiband einzulegen. Eine solche Maßnahme verkompliziert natürlich das Verlegen. Um die Verbindungsstellen wirklich dicht zu halten, erfordert es außerdem eine exakte Arbeitsweise, die gerade im Heimwerkerbereich, der mit derartigen "Klick-Profilen" angesprochen wird, nicht zu erwarten ist.

Aus diesem Grund werden "Klick-Profile", also Paneele, die so ausgestaltet sind, dass zwei über eine Feder-Nut-Verbindung miteinander gekoppelte Paneele an der Verbindungsstelle miteinander verrastet oder verriegelt sind, so ausgebildet, dass in der Verriegelungsstelle kein Spiel, sondern im Gegenteil eine Vorspannung herrscht, die sicherstellt, dass die Paneele an ihrer Verbindungsfuge, insbesondere an der Deckseite dicht aneinander liegen. Zwei an ihren Längsseiten miteinander unter Vorspannung verbundene Paneele, die eine Länge von mehreren Metern haben, können aufgrund der Reibung in der Verbindungsstelle nur unter hohem Kraftaufwand zueinander relativ verschoben werden. Um das neu eingesetzte Paneel mit der Querseite des bereits in der zweiten Reihe liegenden Paneels zu verbinden, muss die verlegende Person in aller Regel Gewalt anwenden, indem das neue Paneel mit Hammerschlägen in die gewünschte Richtung getrieben wird. Die Paneele haben eine Stärke von wenigen Millimetern. Ein unachtsamer Hammerschlag kann nicht nur die durch das Profil empfindliche Querseite des neues Paneels zerstören, sondern auch zu einer Beschädigung der oberen Verbindungskante führen, die möglicherweise nicht erkennbar ist. Können die Paneele durch eine solche Beschädigung an der Trennfuge nicht mehr dicht verlegt werden, kann hier später Feuchtigkeit eindringen, was zu der bereits beschriebenen Zerstörung des Fussbodens führen kann.

Die DE-U-200 02 413 offenbart Paneele mit Klick-Profil, die so verlegt werden, dass die Paneele zunächst mit ihrer Längsseite ineinandergeschoben werden und das neu angelegte Paneel, das mit einem bereits verlegten Paneel an der Längsseite verbunden ist, durch Hammerschläge auf die Querseite in Längsrichtung verschoben wird, bis es mit der gegenüberliegenden Stirnseite in die Stirnseite eines bereits verlegten Paneels einrastet. Mit dem in der Druckschrift beschriebenen Verlegeverfahren ist es nicht möglich, die Schmalseiten zuerst zu verbinden und das Paneel durch Schlagen auf die Längsseite dann in Querrichtung so weit vorzutreiben, bis es mit seiner Längsseite in die bereits verlegten Paneelreihe einrastet.

Von dieser Problemstellung ausgehend soll ein Verlegeverfahren geschaffen werden, das es auch ungeübten Personen auf einfache und rasche Weise gestattet, mechanisch verriegelbare Paneele ("Klick-Profile") zu verlegen, bei denen nach dem Verrasten konstruktiv in der Verbindungsstelle eine Vorspannung herrscht.

Zur Problemlösung zeichnet sich das eingangs beschriebene Verfahren durch folgende Schritte aus:
a) Verbinden und Verrasten einer Mehrzahl von Paneelen an ihren Querseiten zum Auslegen einer ersten Reihe auf dem Boden,
b) Verbinden und Verrasten einer Mehrzahl von Paneelen an ihren Querseiten, bis die für eine zweite Reihe erforderliche Länge, die im wesentlichen der Raumlänge entspricht, erreicht ist,
c) Verbinden und Verrasten der zu der zweiten Reihe zusammengesetzten Paneele mit der Längsseite der in der ersten Reihe liegenden Paneele,
d) Wiederholen der Schritte b) und c) bis der Raum vollständig mit Paneelreihen ausgelegt ist.

Mit Hilfe des erfindungsgemäßen Verfahrens erfolgt keine Relativverschiebung ineinandergesteckter Paneele, so dass keine Beschädigung am Profil eintreten kann.

Vorzugsweise werden die Querseiten der Paneele durch horizontales Verschieben miteinander verbunden. Wenn die Feder-Nut-Verbindung als enge Passung gewählt ist, werden die Paneele mit Hammerschlägen ineinandergetrieben.

Die Paneele können an ihren Querseiten aber auch dadurch verbunden werden, dass das nächste Paneel mit seiner Feder abgewinkelt in die Nut des zuvor angesetzten, flach auf dem Boden liegenden Paneels eingeführt und dann auf den Boden abgesenkt wird.

Die zweite Paneelreihe wird mit der ersten Paneelreihe vorzugsweise durch horizontales Verschieben verbunden. Wenn auch an der Längsseite die Feder-Nut-Verbindung mit einer engen Passung versehen ist, können die Paneelreihen mit Hammerschlägen ineinandergetrieben werden.

Vorzugsweise wird die zweite Paneelreihe mit der ersten Paneelreihe dadurch verbunden, dass alle Paneele der zweiten Paneelreihe mit ihren Federn abgewinkelt in die Nuten der Paneele in der ersten Paneelreihe eingeführt und dann auf den Boden abgesenkt werden.

Das Verbinden der zweiten Paneelreihe mit der ersten Paneelreihe kann auch dadurch erfolgen, dass einzelne Paneelgruppen der zweiten Paneelreihe mit ihren Federn abgewinkelt in die Nuten der Paneele in der ersten Paneelreihe eingeführt und auf den Boden abgesenkt werden.

Bei dieser Methode wird die zweite Paneelreihe über ihre Länge durchhängen. Da nur abschnittweise die zweite Paneelreihe mit der ersten Paneelreihe verbunden wird, kann das Verlegen auch in sehr langen Räumen von einer Person durchgeführt werden.

Mit Hilfe einer Zeichnung soll das erfindungsgemäße Verfahren nachfolgend kurz beschrieben werden. Es zeigt:
- Figur 1 -: den perspektivischen Ausschnitt eines Raumes;
- Figur 2 -: die Ausgestaltung eines Paneels gemäß einer ersten Ausführungsform;
- Figur 3 -: die Ausgestaltung eines Paneels gemäß einer zweiten Ausführungsform;
- Figur 4 -: die Ausgestaltung eines Paneels gemäß einer dritten Ausführungsform.

Die Paneele P sind an ihren Längsseiten 4 und an ihren Querseiten 3 jeweils gegenüberliegend mit einer Feder 1 und einer Nut 2 versehen. An der Unterseite der Feder 3 sind Vorsprünge 5 vorgesehen, die in entsprechende Ausnehmungen 6 an der Unterlippe der Nut 2 eingreifen könne. Über die in die Nut 2 eingeschobene Feder 1 können die Paneele P miteinander verriegelt werden. Die konstruktive Ausgestaltung der Paneele 7 soll nicht weiter erläutert werden. Diesbezüglich wird auf die deutsche Patentschrift DE 198 21 200 verwiesen. Die Paneele können auch so ausgebildet sein, wie sie in der europäischen Patentschrift EP 0 843 763 beschrieben sind.

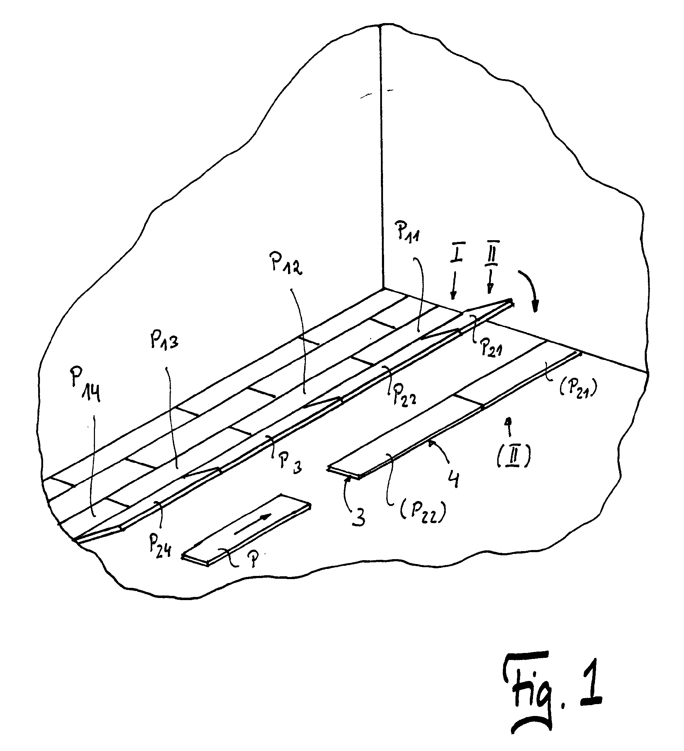

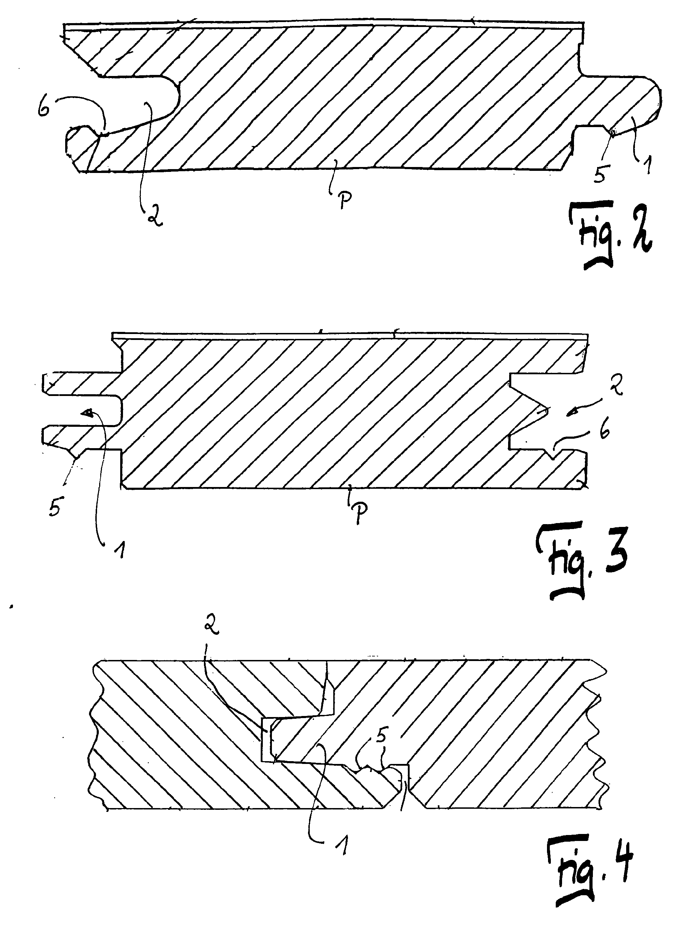

Figur 1 zeigt den Teilauschnitt eines Raumes, in dem ein Fussboden durch Verbinden einzelner Paneele ausgelegt werden soll.

Zum Verlegen des Bodenbelages wird zunächst von Wand zu Wand des Raumes eine erste Reihe I aus Paneelen P₁₁, P₁₂, P₁₃....P₁ₙ, gebildet, indem diese Paneele P₁₁....P₁ₙ jeweils mit ihren Querseiten 3 verbunden werden. In einer nächsten Reihe II wird ein zweites Paneel P₂₂ mit einem flach auf den Boden ausliegenden ersten Paneel P₂₁ mit seiner Querseite 3 verbunden. Anschließend wird ein drittes Paneel P₂₃ mit der Querseite 3 des Paneels P₂₂ verbunden. Es werden zunächst so viele Paneele P₂₁...P₂ₙ miteinander verbunden, bis die zweite Paneelreihe II im wesentlichen die Raumlänge erreicht hat. Sodann wird die vollständige zweite Paneelreihe II mit der zuvor verlegten ersten Paneelreihe I verbunden.

Wie Figur 1 zeigt, kann die zweite Paneelreihe II mit ihrer Längsseite quer an die Längsseite der ersten Paneelreihe I abgewinkelt angesetzt werden, so dass die Federn 1 in die Nuten 2 eingreifen. Anschließend wir die Paneelreihe II auf den Boden herabgeschwenkt, wodurch die Federn 1 mit den Nuten 2 verrasten und eine feste Verbindung hergestellt wird.

Die zweite Paneelreihe II kann auch durch horizontales Verschieben auf die Längsseite der zuvor verlegten Paneelreihe I mit dieser verbunden werden.

Auch möglich ist es, die Querseiten der Paneele P₂ₙ der zweiten Paneelreihe II durch abgewinkeltes Einfügen der Feder in die Nut des jeweils bereits zuvor verlegten Paneels und anschließendes Absenken auf den Boden zu verbinden.

Das Verfahren, dass die Paneele zunächst an ihren Querseiten 3 miteinander verbunden werden und dann eine gesamte Paneelreihe mit der bereits zuvor verlegten Paneelreihe verbunden wird, wird solange wiederholt, bis der Raum vollständig mit Paneelen P ausgelegt ist.

## Patentansprüche

1. Verfahren zum Verlegen und mechanischen Verbinden von Bodenpaneelen (P), die an einer Längs- und einer Querseite (4, 3) mit einer Feder (1) und an der gegenüberbliegenden Längs- und Querseite (4, 3) mit einer zu der Feder (1) korrespondierenden Nut (2) versehen sind, wobei Feder (1) und Nut (2) so ausgestaltet sind, dass ineinandergesteckte Paneele (P) in horizontaler Richtung verrasten, mit folgenden Schritten:
a) Verbinden und Verrasten einer Mehrzahl von Paneelen (P₁₁...,P₁ₙ) an ihren Querseiten (3) zum Auslegen einer ersten Reihe (I) auf dem Boden eines Raumes,
b) Verbinden und Verrasten einer Mehrzahl von Paneelen (P₂₁...,P₂ₙ) an ihren Querseiten (3), bis die für eine zweite Reihe (II) erforderliche Länge, die im wesentlichen der Raumlänge entspricht, erreicht ist,
c) Verbinden und Verrasten der zu der zweiten Reihe (II) zusammengesetzten Paneele (P₂₁...,P₂ₙ) mit der Längsseite der in der ersten Reihe (I) liegenden Paneele (P₁₁...,P₁ₙ),
d) Wiederholen der Schritte b) und c) bis der Raum vollständig mit Paneelreihen ausgelegt ist.

2. Verfahren nach Anspruch 1, **dadurch gekennzeichnet, dass** die Querseiten (3) der Paneele (P) durch horizontales Verschieben miteinander verbunden werden.

3. Verfahren nach Anspruch 2, **dadurch gekennzeichnet, dass** die Paneele (P) mit Hammerschlägen ineinandergetrieben werden.

4. Verfahren nach Anspruch 1, **dadurch gekennzeichnet, dass** die Paneele (P) an ihren Querseiten (3) dadurch verbunden werden, dass das nächste Paneel (P₂₂,...) mit seiner Feder (1) abgewinkelt in die Nut (3) des bereits verlegten Paneels (P₂₁) eingefügt und dann auf den Boden abgesenkt wird.

5. Verfahren nach Anspruch 1, **dadurch gekennzeichnet, dass** die zweite Reihe (II) mit der ersten Reihe (I) durch horizontales Verschieben verbunden wird.

6. Verfahren nach Anspruch 1, **dadurch gekennzeichnet, dass** die zweite Reihe (II) mit Hammerschlägen in die erste Reihe (I) getrieben wird.

7. Verfahren nach Anspruch 1, **dadurch gekennzeichnet, dass** die zweite Reihe (II) mit der ersten Reihe (I) dadurch verbunden wird, dass alle Paneele (P₂₁....,P₂ₙ) mit ihren Federn (1) abgewinkelt in die Nuten (4) der Paneele (P₁₁....,P₁ₙ) in der ersten Paneelreihe (I) eingeführt und dann auf den Boden abgesenkt werden.

8. Verfahren nach Anspruch 1, **dadurch gekennzeichnet, dass** die zweite Reihe (II) mit der ersten Reihe (I) dadurch verbunden wird, dass einzelne Paneelgruppen der zweiten Reihe (II) mit ihren Federn (1) abgewinkelt in die Nuten (2) der Paneele (P₁₁....,P₁ₙ) in der ersten Reihe (I) eingeführt und auf den Boden abgesenkt werden.
